# EUROPEAN PATENT APPLICATION

(11) **EP 4 342 947 A1**
(43) Date of publication of application: **27.03.2024**
(21) Application number: 22804870.8
(22) Date of filing: 03.05.2022
(51) Int. Cl.: C08K 3/36, C08K 3/34, C08K 3/22, C08L 83/04

(54) **SILICONE RUBBER COMPOSITION HAVING EXCELLENT FIREPROOF PERFORMANCE**

(30) Priority: 20.05.2021 KR 20210064948
(71) Applicant: KCC Silicone Corporation, Seoul 06608 (KR)
(72) Inventor: KIM, Sungjoon, Yongin-si, Gyeonggi-do 16881 (KR); KIM, Taekjin, Sejong 30098 (KR); KIM, Hyunwoo, Suwon-si Gyeonggi-do 16294 (KR)
(74) Representative: Cabinet Laurent & Charras
(86) International application number: PCT/KR2022/006333
(87) International publication number: WO 2022/245015

(57) **Abstract**

The present invention relates to a fireproof silicone rubber composition comprising: a silicone rubber comprising an organopolysiloxane, silica and a plasticizer; a flame retardant comprising a platinum catalyst; a fire retardant comprising quartz and wollastonite; and a flame retardant aid comprising cerium oxide and titanium dioxide.

## Description

### [Technical Field]

The present invention relates to a silicone rubber composition that is capable of being mixed in various colors and has excellent flame retardant and fire resistance properties.

### [Background Art]

Unlike carbon-based polymers, a silicone rubber is not subject to thermal decomposition even at a high temperature of more than 300 °C because of the basic structure of strong polymer chains, and is flexible and yet has excellent thermal stability and flame retardant performance. Therefore, silicone rubber is widely used in various application industry fields such as transportation, aviation, space, architecture, civil engineering, electricity, textile, cosmetics, etc. In addition, with this feature of the silicone rubber, the silicone rubber remains a silica that does not include crystalline SiO₂ even under a condition of 1000 °C or more, such as fire. Accordingly, the silicone rubber is used as a basic binder for a fire resistant material. However, although the silicone rubber has good thermal stability, it becomes brittle after the fire is extinguished, so it is common to use the silicone rubber with an inorganic based filler added to enhance the fire resistance performance.

For example, a conventional fire resistant composition including a silicone rubber generally includes a silicone rubber, graphite or vermiculite as a fire resistant material, iron oxide as a fire resistant auxiliary material, and an inorganic fiber as a non-flammable material. Specifically, Korean Registered Patent No. 1896898 (Patent document 1) discloses a fire resistant silicone rubber composition including a silicone rubber, a curing agent, a fire resistant material composed of a natural mineral and a non-flammable material, a flame retardant material and a fire resistant auxiliary material . However, the conventional fire resistant composition, such as Patent document 1, includes graphite as a fire resistant material, and therefore there was a problems of lack of colorability, or a problems of lack of mechanical properties of the manufactured cured products due to a large amount of filler.

Therefore, it is necessary to research and develop a silicone rubber composition that does not contain dark-colored fire resistant materials such as graphite, which allows mixing colors with various colors, and that has excellent mechanical properties of the cured products, and has excellent flame retardancy and fire resistance.

### [Disclosure]

### [Technical Problem]

In this regard, the present invention is directed to providing a silicone rubber composition that does not contain dark-colored fire resistant materials such as graphite, which allows mixing colors with various colors, and that has excellent mechanical properties of the cured products, and has excellent flame retardancy and fire resistance, and is capable of being used as a material in various industries such as automobiles, electronics and electricity, architecture, ships, and railroads.

### [Technical Solution]

The present invention is directed to providing a fire resistant silicone rubber composition including: a silicone rubber including organopolysiloxane, silica, and a plasticizer; a flame retardant material including platinum catalyst; a fire resistant material including quartz and wollastonite; and a flame retardant auxiliary material including cerium oxide and titanium dioxide.

### [Advantageous Effects]

The silicone rubber composition according to the present invention can be mixed in various colors by not using dark-colored flame retardant materials such as graphite and iron oxide or expanding agents, and the cured products of silicone rubber has excellent mechanical properties and excellent flame retardancy and fire resistance, thus the silicone rubber can be used as a material in various industries such as automobiles, electronics and electricity, architecture, ships, and railroads.

### [Best Modes of the Invention]

Hereinafter, the present invention will be described in detail.

### Fire resistant silicone rubber composition

A fire resistant silicone rubber composition according to the present invention includes a silicone rubber, a flame retardant material, a fire resistant material, and a flame retardant auxiliary material.

### Silicone rubber

The silicone rubber includes organopolysiloxane, silica, and a plasticizer.

The silicone rubber is a main component of the fire resistant silicone rubber composition, which serves to implement the mechanical properties such as hardness, tensile strength and elongation of a fire resistant silicone rubber manufactured therefrom.

### <Organopolysiloxane>

The organopolysiloxane is a main polymer in the silicone rubber, which serves to control the hardness, tensile strength, and elongation of the manufactured rubber.

The organopolysiloxane may include at least one alkenyl group in one molecule. For example, the organopolysiloxane may include two or more types of organopolysiloxanes having different alkenyl group content, specifically, a first organopolysiloxane having a relatively low alkenyl group content and a second organopolysiloxane having a relatively high alkenyl group content. As described above, when two or more types of organopolysiloxanes with different alkenyl group content are used, the physical properties of the silicone rubber may be controlled by adjusting the cross-linking density of the silicone rubber to improve hardness, tensile strength, and elongation.

The first organopolysiloxane serves to improve the tensile strength and elongation of the manufactured cured products.

In addition, the first organopolysiloxane may include at least one alkenyl group in one molecule and may be represented by, for example, Chemical Formula 1 below.

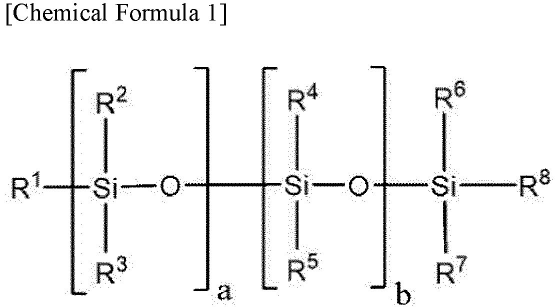

In Chemical formula 1,
R¹ to R⁸ are each independently an alkyl group of carbon number 1 to 10, an alkenyl group of carbon number 2 to 10, or an aryl group of carbon number 6 to 15, and at least one of R² or R⁴ is a vinyl group,
a is an integer from 1 to 10,000,
b is an integer from 1 to 10,000.

In this case, the alkyl group may be, for example, a methyl group, an ethyl group, a propyl group, a butyl group, a pentyl group, a hexyl group, a cyclopentyl group, a cyclohexyl group, or the like, and more specifically, may be a methyl group, an ethyl group, or a propyl group.

In addition, the alkenyl group may be, for example, a vinyl group, an allyl group, a butenyl group, a pentenyl group, a hexenyl group, or the like, and more specifically, a vinyl group or an allyl group.

The aryl group may be, for example, a phenyl group, a tolyl group, a xylyl group, a naphthyl group, a biphenylene group, or the like, and more particularly, a phenyl group.

In addition, the alkyl and alkenyl groups may be linear or branched.

The first organopolysiloxane may have a vinyl group content of 0.03 to 0.08 mol%, or 0.04 to 0.05 mol%. When the vinyl group content of the first organopolysiloxane is in the range above, the strength of the manufactured cured products of the silicone rubber may be improved. In addition, when the vinyl group content of the first organopolysiloxane is less than the range above, a problem of poor curing performance may occur due to insufficient vinyl group content, and when exceeding the range above, the cross-linking density of the silicone rubber composition may increase more than necessary, and although the curing performance may be improved, a problem of poor tensile strength and elongation, etc. may occur due to the high cross-linking density of the manufactured cured products.

The first organopolysiloxane may have a viscosity of 5,000,000 to 100,000,000 cst, or 10,000,000 to 100,000,000 cst at 25 °C. When the viscosity of the first organopolysiloxane at 25 °C is in the range above, there is an effect of adjusting the viscosity of the composition to make the composition suitable for compression molding and injection molding. In addition, when the viscosity of the first organopolysiloxane at 25°C is less than the range above, the strength of a raw material of the manufactured rubber may be weakened, resulting in poor workability, and when exceeding the range above, the physical properties of the rubber and the dispersion of the silica may be in difficulties and the strength of the raw material may be too hard, resulting in poor workability when the silicone rubber is manufactured.

In addition, the first organopolysiloxane may have a degree of polymerization of 1,000 to 10,000, or 3,000 to 8,000. When the degree of polymerization of the first organopolysiloxane is in the range above, there is an effect of improving the tensile strength of the manufactured cured products of the silicone rubber. In this case, the degree of polymerization is the number of silicon atoms in one molecule of the first organopolysiloxane. In addition, when the degree of polymerization of the first organopolysiloxane is less than the range above, a problem of poor workability such as two-roll milling of the manufactured silicone rubber may occur, and when exceeding the range above, a problem of poor physical properties such as tensile strength and elongation of the manufactured cured products may occur.

The first organopolysiloxane may be included in a content of 45 to 75 parts by weight, or 50 to 70 parts by weight, relative to 100 parts by weight of the silicone rubber. When the content of the first organopolysiloxane is in the range above, the plasticity of the composition can be easily adjusted for compression and injection molding, and there is an effect of improving the tensile strength and controlling the hardness of the cured products of the silicone rubber, which can be utilized as an excellent packing material. In addition, when the content of the first organopolysiloxane is less than the range above, a problem of decreased tensile strength and elongation of the manufactured cured products may occur, and when exceeding the range above, a problem of decreased hardness of the silicone rubber may occur.

The second organopolysiloxane serves to reinforce the hardness and tensile strength of the silicone rubber.

The second organopolysiloxane includes at least one alkenyl group in one molecule and may be represented, in particular, by the Chemical Formula 2 below.

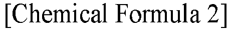

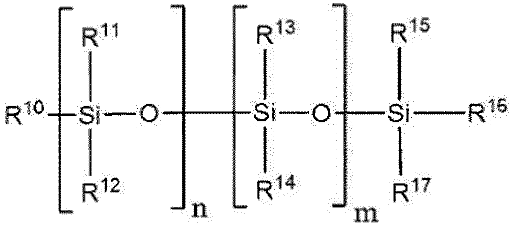

In Chemical formula 2,
R¹⁰ to R¹⁷ are each independently an alkyl group of carbon number 1 to 10, an alkenyl group of carbon number 2 to 10, or an aryl group of carbon number 6 to 15, in which at least one of R¹⁰, R¹¹, R¹³ or R¹⁶ includes a vinyl group,
n is an integer from 1 to 10,000,
m is an integer from 1 to 10,000.

In this case, the alkyl group may be, for example, a methyl group, an ethyl group, a propyl group, a butyl group, a pentyl group, a hexyl group, a cyclopentyl group, a cyclohexyl group, or the like, and more specifically, may be a methyl group, an ethyl group, or a propyl group.

In addition, the alkenyl group may be, for example, a vinyl group, an allyl group, a butenyl group, a pentenyl group, a hexenyl group, or the like, and more specifically, a vinyl group or an allyl group.

The aryl group may be, for example, a phenyl group, a tolyl group, a xylyl group, a naphthyl group, a biphenylene group, or the like, and more particularly, a phenyl group.

In addition, the alkyl and alkenyl groups may be linear or branched.

The second organopolysiloxane may have a vinyl group content of 0.1 to 0.3 mol%, or 0.15 to 0.25 mol%. When the vinyl group content of the second organopolysiloxane is in the range above, the mechanical properties such as hardness and tensile strength of the silicone rubber may be well controlled. In addition, when the vinyl group content of the second organopolysiloxane is less than the range above, a problem of lower hardness and tensile strength of the manufactured cured products may occur, and when exceeding the range above, a problem of higher hardness and lower elongation of the manufactured cured products may occur.

The second organopolysiloxane may have a viscosity of 5,000,000 to 100,000,000 cst or 10,000,000 to 100,000,000 cst at 25 °C. When the viscosity of the second organopolysiloxane at 25 °C is in the range above, there is an effect of adjusting the viscosity of the composition to make the composition suitable for compression molding and injection molding. In addition, when the viscosity of the second organopolysiloxane at 25°C is less than the range above, the strength of a raw material of the rubber may be weakened, resulting in poor workability, and when exceeding the range above, the physical properties of the rubber and the dispersion of the silica may be in difficulties and the strength of the raw material may be too hard, resulting in poor workability when the silicone rubber is manufactured.

In addition, the second organopolysiloxane may have a degree of polymerization of 1,000 to 10,000, or 3,000 to 8,000. When the degree of polymerization of the second organopolysiloxane is in the range above, there is an effect of improving the tensile strength of the manufactured cured products of the silicone rubber. In this case, the degree of polymerization is the number of silicon atoms in one molecule of the second organopolysiloxane. In addition, when the degree of polymerization of the second organopolysiloxane is less than the range above, a problem of decreased elongation of the silicone rubber may occur, and when exceeding the range above, and problems of increased mold flowability and plasticity of the silicone rubber or poor tensile strength may occur.

The second organopolysiloxane may be included in a content of 10 to 30 parts by weight, or 12 to 20 parts by weight, relative to 100 parts by weight of the silicone rubber. When the content of the second organopolysiloxane is in the range above, the plasticity of the composition can be easily adjusted for compression and injection molding, and there is an effect of improving the tensile strength and controlling the hardness of the cured products of the silicone rubber, which can be utilized as an excellent packing material. Furthermore, when the content of the second organopolysiloxane is less than the range above, a problem of low hardness and poor tensile strength of the manufactured cured products may occur, and when exceeding the range above, a problem of poor elongation, etc. may occur due to an increase in the hardness of the manufactured cured products.

The first organopolysiloxane and the second organopolysiloxane may be included in a weight ratio of 2 to 6 : 1, or in a weight ratio of 3 to 5 :1. When the weight ratio of the first organopolysiloxane to the second organopolysiloxane is less than the range above, that is, when a small amount of the first organopolysiloxane is included with reference to the weight of the second organopolysiloxane, the hardness of the manufactured cured products increases, resulting in a problem of lower elongation, and when exceeding the range, that is, when an excessive amount of the first organopolysiloxane is included with reference to the weight of the second organopolysiloxane, the hardness of the manufactured cured products decreases, resulting in a decrease in tensile strength, and a problem of demolding during compression and injection molding may occur.

### <Silica>

The silica serves to improve the mechanical strength, flame retardancy, and fire resistance of the cured products.

The silica is not particularly limited as long as it is generally applicable to the silicone rubber, and may be, for example, amorphous or crystalline.

In addition, the silica may be a wet, dry, fumed, or calcined silica.

The silica may have a BET specific surface area of 50m²/g or more, 50 to 400 m²/g, or 150 to 250 m²/g. When the BET specific surface area of silica is less than the range above, there may be a problem in that the improvement of mechanical properties such as hardness and tensile strength of the manufactured rubber, which are effects of adding the silica, is not sufficient, and when exceeding the range above, there may be a problem in that the dispersion of the silica is not easy and the hardness of the manufactured cured products is poor.

In addition, the silica may have an average particle diameter (d50) of 0.001 to 1 µm, or 0.01 to 0.1 µm. When the average particle diameter (d50) of the silica is less than the range above, the dispersion of the silica is not easy, and when the average particle diameter (d50) of the silica is more than the range above, there may be a problem in that the transparency of the composition and the mechanical properties of the manufactured silicone rubber are degraded. In this case, the average particle diameter (d50) is a value of the particle diameter at 50 % of the volume accumulation of the particle size distribution as calculated by a volume reference measured by laser diffraction.

The silica may be included in a content of 10 to 35 parts by weight, or 15 to 30 parts by weight, relative to 100 parts by weight of the silicone rubber. When the silica content is less than the range above, the improvement of mechanical properties such as hardness and tensile strength of the manufactured silicone rubber, which are effects of adding the silica, may be poor, and when exceeding the range above, there may be a problem of poor processability of the composition due to excessive silica.

### <Plasticizer>

The plasticizer serves to bind to a surface of the silica, inhibiting crepe hardening during processing caused by the direct binding of the silica to the organopolysiloxane, and to improve the dispersibility of the silica.

The plasticizer may be used without particular limitation as long as it is a surface treatment agent for the silica in general, and may be, for example, a hydroxyl group-containing organohydroxypolysiloxane. Specifically, the plasticizer may not include an alkenyl group but may include a hydroxyl group (OH) at a terminal thereof, and more specifically, may be represented by Chemical formula 3 below.

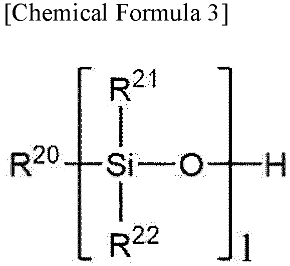

In Chemical formula 3,
R²⁰ is a substituted or unsubstituted C₁₋₁₀ alkyl or hydroxyl group,
R²¹ and R²² are each independently a substituted or unsubstituted C₁₋₁₀ alkyl group,
l is a real number from 5 to 1,500.

Specifically, R²⁰ may be a substituted or unsubstituted C₁₋₄ alkyl or hydroxyl group, and R²¹ and R²² may each be independently a substituted or unsubstituted C₁₋₆ alkyl group, or a C₁₋₃ alkyl group. In this case, the alkyl group may be linear or branched.

In addition, l may be a real number of 5 to 1,000 or 5 to 100.

The plasticizer may have a hydroxyl group content of 4 to 7 wt%, 4.5 to 6.5 wt%, or 5.0 to 6.0 wt%, with reference to a total weight. When the hydroxyl group content of the plasticizer is less than the range above, the mechanical properties of the manufactured fire resistant silicone rubber may be degraded, and when exceeding the range above, there may be a problem in that the processability of the manufactured silicone rubber is degraded because the silicone rubber has a residual oiliness.

In addition, the plasticizer may have a viscosity of 30 to 60 centi-poise (cP) or 35 to 50 cP at 25 °C. When the viscosity of the plasticizer at 25°C is less than the range above, the mechanical properties of the cured products may be degraded due to the difficulty in dispersion of the silica, and when exceeding the range above, the viscosity of the composition may decrease resulting in a problem of degraded workability.

The plasticizer may be included in a content of 1 to 8 parts by weight, or 1 to 5 parts by weight, relative to 100 parts by weight of the silicone rubber. When the content of the plasticizer is less than the range above, the silica is not easily dispersed, which causes a problem of degradation of the mechanical properties of the manufactured cured products, and when exceeding the range above, the oiliness in the rubber composition may be excessive, which causes degradation of workability and mechanical properties.

### Flame retardant material

A flame retardant material can improve flame retardancy by increasing the cross-linking density of a resin during combustion, thereby leading to resinization. The flame retardant material includes a platinum catalyst.

The platinum catalyst may be used without particular limitation as long as it can be used as a catalyst for the silicone rubber in general. For example, the platinum catalyst may be platinum halide (e.g., a reaction product including platinum halide such as PtCl₄, H₂PtCl₄· 6H₂O, or Na₂PtCl₄·4H₂O and cyclohexane), platinum-olefin complex, platinum-alcohol complex, platinum-alcoholate complex, platinum-ether complex, platinum-aldehyde complex, platinum-ketone complex, platinum-vinylsiloxane complex (e.g., platinum-1,3-divinyl-1,1,3,3-tetramethyldisiloxane complex), bis-(γ-picoline)-platinum dichloride, trimethylenedipyridine-platinum dichloride, dicyclopentadiene-platinum dichloride, cyclooctadiene-platinum dichloride, cyclopentadiene-platinum dichloride, bis(alkynyl)bis(triphenylphosphine)platinum complex, bis(alkenyl)(cyclooctadiene)platinum complex, or the like.

In addition, the flame retardant material may be included in a content of 0.01 to 0.5 parts by weight, or 0.05 to 0.3 parts by weight, relative to 100 parts by weight of the silicone rubber. When the content of the flame retardant material is less than the range above, the flame retardancy and fire resistance during combustion becomes poor. In addition, when the content of the flame retardant material exceeds the range above, there may be a problem that the cost effectiveness of using the expensive platinum catalyst decreases, and the appearance of the cured products also becomes more yellowish.

In addition, the silicone rubber composition may further include a flame retardant material conventionally used in the field of the silicone rubber.

### Fire resistant material

The fire resistant material serves to improve the ceramicization performance during combustion of the composition and to improve the fire resistance of the manufactured cured products.

The fire resistant material includes quartz and wollastonite. When the silicone rubber is combusted, the quartz and wollastonite, which are fire-resistant materials, combine with other inorganic fillers to form a ceramic structure to achieve fire resistance performance.

The quartz may have an average diameter of 0.5 to 50 µm, 1 to 10 µm, or 1 to 5 µm. When the average diameter of the quartz is less than the range above, there may be a problem in filling the silicone rubber, and when exceeding the range above, there may be a problem in the mechanical properties and fire resistance performance of the silicone rubber.

The wollastonite may have an average diameter of 1 to 50 µm, 5 to 20 µm, or 5 to 10 µm. When the average diameter of the wollastonite is less than the range above, there may be a problem in filling the silicone rubber, and when exceeding the range above, there may be a problem in the mechanical properties and fire resistance performance of the silicone rubber.

The fire resistant silicone rubber composition may include the quartz and wollastonite in a weight ratio of 1: 0.5 to 1.5, or in a weight ratio of 1: 0.7 to 1.2. When the weight ratio of the quartz to the wollastonite is less than the range above, that is, when a small amount of the wollastonite is included relative to the content of the quartz, there may be a problem of the poor flame retardancy and fire resistance performance of the manufactured cured products, and when the weight ratio is more than the range above, that is, when an excessive amount of the wollastonite is included relative to the content of the quartz, there may be a problem of the poor mechanical properties of the manufactured cured products and the poor workability, such as two-roll milling.

For example, the fire resistant material may be included in the composition at a content of 40 to 65 parts by weight, or 45 to 60 parts by weight, relative to 100 parts by weight of the silicone rubber. Specifically, the fire resistant silicone rubber composition may include 20 to 35 parts by weight or 22 to 30 parts by weight of quartz, and 20 to 35 parts by weight or 22 to 30 parts by weight of wollastonite, relative to 100 parts by weight of the silicone rubber.

When the content of fire resistant material in the fire resistant silicone rubber composition is less than the range above, there may be a problem of the poor fire resistance performance and flame retardancy of the manufactured cured products, and when exceeding the range above, there may be a problem of the poor mechanical properties and workability of the manufactured cured products.

### Flame retardant auxiliary material

The flame retardant auxiliary material improves the heat resistance performance by preventing the oxidation of organic groups, preventing the cutting of a main chain, and improves the flame retardancy during combustion, thereby improving the heat resistance and flame retardancy of the manufactured cured products and exerting a synergistic effect on the ceramicization performance of the composition.

The flame retardant auxiliary material includes cerium oxide and titanium dioxide.

The cerium oxide (CeO₂) may have an average diameter of 0.5 to 10 µm or 1 to 5 µm. When the average diameter of the cerium oxide is less than the range above, there may be a problem of difficult dispersion in the composition, and when exceeding the range above, there may be a problem of the poor heat resistance and flame retardancy of the silicone rubber.

The titanium dioxide (TiO₂) may have a BET specific surface area of 20 to 70 m²/g, or 35 to 60 m²/g. When the BET specific surface area of titanium dioxide is less than the range above, there may be a problem of the poor heat resistance and flame retardancy, and when exceeding the range above, there may be a problem of the difficult dispersion of titanium dioxide in the composition.

The fire resistant silicone rubber composition may include the cerium oxide and titanium dioxide in a weight ratio of 1: 0.5 to 1.5, or in a weight ratio of 1: 0.8 to 1.3. When the mixed weight ratio of the cerium oxide and titanium dioxide is less than the range above, that is, when a small amount of titanium dioxide is included in relative to the content of cerium oxide, there may be a problem of the poor flame retardant performance of the manufactured cured products, and when exceeding the range above, that is, when an excessive amount of titanium dioxide is included relative to the content of cerium oxide, there may be a problem of the poor heat resistance of the manufactured cured products.

For example, the flame retardant auxiliary material may be included in the composition at a content of 0.2 to 10 parts by weight, or 0.5 to 5 parts by weight, relative to 100 parts by weight of the silicone rubber. Specifically, the fire resistant silicone rubber composition may include 0.1 to 5 parts by weight or 0.2 to 3 parts by weight of the cerium oxide, and 0.1 to 5 parts by weight or 0.2 to 3 parts by weight of the titanium dioxide, based on 100 parts by weight of the silicone rubber.

When the content of the flame retardant auxiliary material in the fire resistant silicone rubber composition is less than the range above, there may be a problem of the poor heat resistance and flame retardant performance of the silicone rubber, and when exceeding the range above, the mechanical properties of the silicone rubber may be degraded or the mixing color may be affected.

The fire resistant silicone rubber composition substantially does not include a conventional colored flame retardant material and/or fire resistant material, such as expanded graphite, expanded vermiculite, iron oxide, hydromagnesite, hunthite, diatomaceous earth, kaolin, aluminum oxide, magnesium oxide, or the like. Specifically, the fire resistant silicone rubber composition may include less than 0.1 wt%, or less than 0.01 wt% of the colored flame retardant material or fire resistant material as described above, with reference to the total weight. Accordingly, the fire resistant silicone rubber composition according to the present invention has an advantage of being able to be mixed in various colors.

In addition, the fire resistant silicone rubber composition does not include a platinum-based flame retardant material such as bis(2,4-pentanedionato)platinum. Specifically, the fire resistant silicone rubber composition may include less than 0.1 wt%, or less than 0.01 wt%, of the platinum-based flame retardant material with reference to the total weight. Accordingly, the fire resistant silicone rubber composition according to the present invention has an effect of excellent flame retardancy and fire resistance performance.

### Fire resistance silicone rubber

The fire resistant silicone rubber according to the present invention is manufactured from the fire resistant silicone rubber composition as described above.

The fire resistant silicone rubber may have a hardness of 55 to 65 shore A or 57 to 62 shore A as measured by the method described in ASTM D2240. When the hardness of the fire resistance silicone rubber is less than the range above, there may be a decrease in elasticity due to being too soft, and when the hardness is more than the range above, there may be a decrease in elasticity and elongation due to being too hard.

In addition, the fire resistant silicone rubber may have a tensile strength of 6.0 MPa or more, or 6.0 to 7.5 MPa, as measured by a method described in ASTM D412. When the tensile strength of fire resistant silicone rubber is less than the range above, there may be poor mechanical properties due to weak strength.

The fire resistant silicone rubber may have an elongation of 300 to 500 % or 350 to 500 %. When the elongation of fire resistant silicone rubber is less than the range above, there may be a decrease in durability, and when exceeding the range above, there may be a decrease in elasticity.

In addition, the fire resistant silicone rubber may have a flame retardancy of UL-V0 as measured by the method described in UL94-V. That is, the fire resistant silicone rubber has excellent flame retardancy and fire resistance, and can be used as a material in various industries such as automobiles, electronics and electricity, architecture, ships, and railroads.

### [Modes of the Invention]

Hereinafter, the present invention will be described more specifically with reference to the following examples. However, the following description of examples is intended only to illustrate specific embodiments of the present invention and is not intended to be interpreted as limiting or restricting the scope of the present invention to the description of these examples.

### Example 1. Manufacturing of fire resistant silicone rubber composition

In a kneader reactor, 59.3 parts by weight of the first organopolysiloxane, 15 parts by weight of the second organopolysiloxane, 22.6 parts by weight of the silica, and 3.1 parts by weight of the plasticizer were added and stirred for 20 minutes at 80±20°C. In this case, the silica was added four separate times and stirred to be dispersed. Upon completion of stirring, the temperature was raised to 160±10 °C, and the mixture was stirred for 2 hours, and then cooled to 80 °C to manufacture a base compound, which is the silicone rubber. Then, 26.7 parts by weight of the wollastonite, 26.7 parts by weight of the quartz, 0.15 parts by weight of the platinum catalyst, 0.8 parts by weight of the cerium oxide (CeO2) and 0.8 parts by weight of the titanium dioxide (TiO2) were added to 100 parts by weight of the silicone rubber, and then the mixture was mixed in a kneader reactor for 30 minutes or more to manufacture the fire resistant silicone rubber composition.

### Examples 2 to 21 and Comparative Examples 1 to 6.

The silicone rubber composition was manufactured in the same manner as in Example 1, except that the composition as described in Tables 1 to 3 was used.

**[Table 1]**

| Component (part by weight) | | Example | | | | | | | | |
|---|---|---|---|---|---|---|---|---|---|---|
| | | 1 | 2 | 3 | 4 | 5 | 6 | 7 | 8 | 9 |
| Silicone rubber | First organopolysilox ane | 59.3 | 53.3 | 64.5 | 59.3 | 59.3 | 59.3 | 59.3 | 59.3 | 59.3 |
| | Second organopolysilox ane | 15.0 | 13.5 | 17.7 | 15.0 | 15.0 | 15.0 | 15.0 | 15.0 | 15.0 |
| | Silica | 22.6 | 28.6 | 15.2 | 22.6 | 22.6 | 22.6 | 22.6 | 22.6 | 22.6 |
| | Plasticizer | 3.1 | 4.6 | 2.6 | 3.1 | 3.1 | 3.1 | 3.1 | 3.1 | 3.1 |
| | Total amount | 100 | 100 | 100 | 100 | 100 | 100 | 100 | 100 | 100 |
| Flame retardan t material | Platinum catalyst | 0.15 | 0.15 | 0.15 | 0.15 | 0.15 | 0.15 | 0.15 | 0.005 | 0.8 |
| | Quartz | 26.7 | 24.6 | 28.5 | 36.2 | 17.2 | 26.7 | 26.7 | 26.7 | 26.7 |
| | Wollastonite | 26.7 | 28.5 | 23.1 | 17.2 | 36.2 | 26.7 | 26.7 | 26.7 | 26.7 |
| Fire resistant material | Diatomaceous earth | - | - | - | - | - | - | - | - | - |
| Flame retardan t auxiliar y material | Cerium oxide (CeO₂) | 0.8 | 1.8 | 0.4 | 0.8 | 0.8 | 1.1 | 0.5 | 0.8 | 0.8 |
| | Titanium dioxide (TiO₂) | 0.8 | 1.6 | 0.5 | 0.8 | 0.8 | 0.5 | 1.1 | 0.8 | 0.8 |
| | Triazole | - | - | - | - | - | - | - | - | - |

**[Table 2]**

| Component (part by weight) | | Example | | | | | | | |
|---|---|---|---|---|---|---|---|---|---|
| | | 10 | 11 | 12 | 13 | 14 | 15 | 16 | 17 |
| Silicone rubber | First organopolysiloxane | 59.3 | 59.3 | 59.3 | 59.3 | 43.2 | 76.5 | 66.1 | 38.7 |
| | Second organopolysiloxane | 15.0 | 15.0 | 15.0 | 15.0 | 31.1 | 8.8 | 8.2 | 35.6 |
| | Silica | 22.6 | 22.6 | 22.6 | 22.6 | 22.6 | 11.6 | 22.6 | 22.6 |
| | Plasticizer | 3.1 | 3.1 | 3.1 | 3.1 | 3.1 | 3.1 | 3.1 | 3.1 |
| | Total amount | 100 | 100 | 100 | 100 | 100 | 100 | 100 | 100 |
| Flame retardan t material | Platinum catalyst | 0.15 | 0.15 | 0.15 | 0.15 | 0.15 | 0.15 | 0.15 | 0.15 |
| Fire resistant material | Quartz | 18.5 | 36.1 | 26.7 | 26.7 | 26.7 | 26.7 | 26.7 | 26.7 |
| | Wollastonite | 18.5 | 36.1 | 26.7 | 26.7 | 26.7 | 26.7 | 26.7 | 26.7 |
| | Diatomaceous earth | - | - | - | - | - | - | - | - |
| | Cerium oxide (CeO₂) | 0.8 | 0.8 | 0.07 | 6 | 0.8 | 0.8 | 0.8 | 0.8 |
| Flame retardan t auxiliar y material | Titanium dioxide (TiO₂) | 0.8 | 0.8 | 0.07 | 6 | 0.8 | 0.8 | 0.8 | 0.8 |
| | Triazole | - | - | - | - | - | - | - | - |

**[Table 3]**

| Component (part by weight) | | Example | | | | Comparative Example | | | | | |
|---|---|---|---|---|---|---|---|---|---|---|---|
| | | 18 | 19 | 20 | 21 | 1 | 2 | 3 | 4 | 5 | 6 |
| Silicone rubber | First organopol ysiloxane | 71.5 | 46.2 | 69.8 | 54.1 | 59.3 | 59.3 | 59.3 | 59.3 | 59.3 | 59.3 |
| | Second organopol ysiloxane | 17.2 | 13.1 | 17.3 | 15.0 | 15.0 | 15.0 | 15.0 | 15.0 | 15.0 | 15.0 |
| | Silica | 8.2 | 37.6 | 12.1 | 22.6 | 22.6 | 22.6 | 22.6 | 22.6 | 22.6 | 22.6 |
| | Plasticizer | 3.1 | 3.1 | 0.8 | 8.3 | 3.1 | 3.1 | 3.1 | 3.1 | 3.1 | 3.1 |
| | Total amount | 100 | 100 | 100 | 100 | 100 | 100 | 100 | 100 | 100 | 100 |
| Flame retardan t material | Platinum Catalyst | 0.15 | 0.15 | 0.15 | 0.15 | 0.15 | 0.15 | 0.15 | 0.15 | 0.15 | 0.15 |
| Fire resistant material | Quartz | 26.7 | 26.7 | 26.7 | 26.7 | - | 53.4 | 26.7 | 26.7 | 26.7 | 26.7 |
| | Wollaston ite | 26.7 | 26.7 | 26.7 | 26.7 | 53.4 | - | 26.7 | 26.7 | 26.7 | - |
| | Diatomace ous earth | - | - | - | - | - | - | - | - | - | 26.7 |
| Flame retardan t auxiliar y material | Cerium oxide | 0.8 | 0.8 | 0.8 | 0.8 | 0.8 | 0.8 | 1.6 | - | 0.8 | 0.8 |
| | Titanium dioxide | 0.8 | 0.8 | 0.8 | 0.8 | 0.8 | 0.8 | - | 1.6 | - | 0.8 |
| | Triazole | - | - | - | - | - | - | - | - | 0.8 | - |

The ingredients and product names of each component used in the following examples and comparative examples are shown in Table 4 below.

**[Table 4]**

| Components | Remarks |
|---|---|
| First organopolysilox ane | Vinyl group content: 0.04mol%, viscosity at 25°C: 80,000,000cst, degree of polymerization: 6,500 |
| | 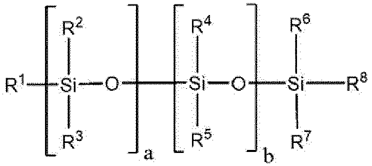 |
| | R², R³ and R ⁵ to R⁷ are methyl groups, and R¹, R⁴ and R⁸ are vinyl groups. |
| Second organopolysilox ane | Vinyl group content: 0.2mol%, viscosity at 25°C: 80,000,000cst, degree of polymerization: 6,000 |
| | 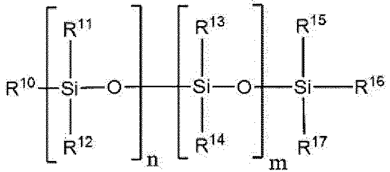 |
| | R¹¹, R¹², R¹⁴, R¹⁵ and R¹⁷ are methyl groups, and R¹⁰, R¹³ and R¹⁶ are vinyl groups. |
| Silica | Fumed silica (specific surface area BET: 200 m²/g, average particle diameter (d50): 0.012 µm) |
| Plasticizer | Hydroxyl group content: 5.5 wt%, viscosity at 25 °C: 40 cP |
| | 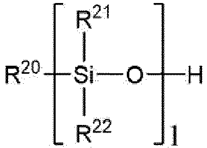 |
| | R²⁰ is a hydroxyl group and R²¹ and R²² are methyl groups. |
| Platinum catalyst | Complex of platinum and 1,3-divinyl-1,1,3,3-tetramethyldisiloxane (PT content: 4 wt%) |
| Quartz | Average particle diameter: 3±2 µm |
| Wollastonite | Average particle diameter: 7±2 µm |
| Cerium oxide | CeO₂, average particle diameter: 3±2 µm |
| Titanium dioxide | BET surface area: 50 m²/g |
| Diatomaceous earth | Average particle diameter: 9±2 µm |
| Triazole | Purity: 97 % or more |

### Test Example: Evaluating physical properties

The physical properties of the specimens prepared from the compositions of the examples and comparative examples were measured by the following method and are shown in Table 5.

Specifically, the specimen was prepared by uniformly mixing 100 parts by weight of the fire resistant silicone rubber composition of the example or comparative example and 1.5 parts by weight of 2,4-dichlorobenzoyl peroxide, which is a curing agent, with a two-roll mill, first curing at 120°C for 5 minutes, and second curing at 200°C for 4 hours to prepare the specimen of fire resistant silicone rubber on a sheet having a thickness of 2 mm.

### (1) Plasticity

Using a plastometer and the Williams Plasticity method of JIS K6249, the specimen was plasticized (softened) for 5 minutes and then subjected to a 2-minute defoaming process, then a mass of 2 times its specific gravity was taken, cooled for 5 minutes, and measured for the degree of spreading under a load of 5 kg for 5 minutes.

In this case, the plasticity is a property that refers to the degree of softness or spreadability of a rubber, and when the plasticity is low (i.e., too soft) in the process of a two-roll mill operation, it is difficult to pull the rubber in the shape of a sheet, and when the rubber is injected into an injection molding machine, a continuous injection needs to be made in the shape of a long ribbon without the rubber tearing apart, but it is often torn, which may cause difficulties during the injection into the injection molding machine.

### (2) Hardness

A 6 mm thick specimen of fire resistance silicone rubber was prepared and then the hardness at a point inside 1/2 inch from the edge was measured five times using a shore A type durometer, according to the method described in ASTM D2240. Measurement points were selected randomly, while those previously measured was avoided. Then, the average of the five measured hardness values was calculated to determine the hardness of the specimen.

### (3) Tensile strength

The tensile strength of the fire resistant silicone rubber was measured according to the method described in ASTM D412. Specifically, an ASTM D412 Type C specimen with a thickness of 2 mm were prepared and then tensile strength was measured by pulling the specimen at a speed of 500 mm/min using a Universal Testing Machine as a measuring instrument. The tensile strength was measured on four specimens for each composition, and the average of the four values was determined as the tensile strength.

### (4) Elongation

The elongation of the fire resistant silicone rubber was measured according to the method described in ASTM D412. Specifically, an ASTM D412 Type C specimen with a thickness of 2 mm was prepared and the amount of increased length of the final stretched specimen upon fracture of the specimen was measured using a Universal Testing Machine as a measuring instrument. Then, the amount of increased length was calculated as a percentage of the initial transverse length of 2 cm of the specimen, which was determined as elongation.

### (5) Specific Gravity

The specific gravity was measured according to the method described in ASTM D792.

### (6) Flame retardancy

The flame retardancy was measured according to the method described in UL94-V.

### (7) Fire resistance

To measure the fire resistance of the fire resistant silicone rubber, a sheet-shaped specimen with a thickness of 2 mm is mounted on a fixture. Then, using a butane gas torch (gas consumption 80 g/h, 960 kcal), fire is applied to one surface of the specimen for 10 minutes with a flame length of 10 cm. The silicone rubber is then removed from the fixture and the appearance thereof is inspected and determined to be poor when it is punctured or burned, fair when it is cracked, or good when it has a good appearance.

**[Table 5]**

| Physical Properties | Plastici ty | Hardness (Shore A) | Tensile Strength (MPa) | Elongati on (%) | Specific gravity | Flame retardan cy | Fire resistance |
|---|---|---|---|---|---|---|---|
| Example 1 | 201 | 59 | 7.1 | 450 | 1.43 | V0 | Good |
| Example 2 | 219 | 62 | 6.7 | 370 | 1.48 | V0 | Good |
| Example 3 | 185 | 57 | 6.5 | 350 | 1.39 | V0 | Good |
| Example 4 | 193 | 57 | 6.3 | 430 | 1.42 | V1 | Fair |
| Example 5 | 223 | 61 | 5.5 | 260 | 1.44 | V0 | Good |
| Example 6 | 195 | 59 | 6.6 | 390 | 1.43 | V1 | Fair |
| Example 7 | 202 | 59 | 6.7 | 370 | 1.42 | V0 | Fair |
| Example 8 | 200 | 58 | 6.9 | 410 | 1.43 | V1 | Fair |
| Example 9 | 198 | 57 | 5.5 | 280 | 1.43 | V0 | Good |
| Example 10 | 180 | 56 | 7.0 | 420 | 1.35 | V1 | Fair |
| Example 11 | 240 | 68 | 4.5 | 210 | 1.55 | V0 | Good |
| Example 12 | 195 | 58 | 6.8 | 390 | 1.41 | V1 | Fair |
| Example 13 | 210 | 62 | 4.7 | 230 | 1.45 | V0 | Good |
| Example 14 | 192 | 67 | 5.6 | 260 | 1.43 | V0 | Good |
| Example 15 | 153 | 46 | 3.9 | 280 | 1.43 | V1 | Fair |
| Example 16 | 183 | 63 | 5.8 | 260 | 1.43 | V1 | Good |
| Example 17 | 195 | 54 | 5.6 | 230 | 1.43 | V0 | Fair |
| Example 18 | 135 | 48 | 4.8 | 220 | 1.38 | V1 | Fair |
| Example 19 | 260 | 67 | 5.8 | 230 | 1.49 | V0 | Good |
| Example 20 | 171 | 51 | 4.7 | 250 | 1.37 | V1 | Fair |
| Example 21 | 143 | 47 | 3.5 | 650 | 1.41 | V1 | Fair |
| Comparativ e Example 1 | 243 | 57 | 2.5 | 180 | 1.38 | Poor | Fair |
| Comparativ e Example 2 | 222 | 56 | 6.0 | 310 | 1.37 | Poor | Poor |
| Comparativ e Example 3 | 190 | 58 | 6.5 | 330 | 1.43 | V1 | Poor |
| Comparativ e Example 4 | 193 | 59 | 6.2 | 350 | 1.42 | V1 | Poor |
| Comparativ e Example 5 | 191 | 57 | 5.7 | 290 | 1.42 | V1 | Poor |
| Comparativ e Example 6 | 201 | 56 | 5.2 | 260 | 1.41 | Poor | Poor |

As shown in Table 5, it can be seen that the specimens prepared from the compositions of the examples have adequate plasticity, hardness, tensile strength, elongation and specific gravity, and good flame retardancy and fire resistance.

Meanwhile, in the comparative examples, Comparative example 1 that does not include quartz showed poor tensile strength, elongation, and flame retardancy, and Comparative example 2 that does not include wollastonite showed poor flame retardancy and fire resistance.

In addition, Comparative examples 3 and 4 that do not include cerium oxide and titanium dioxide showed poor fire resistance, and Comparative example 5 in which triazole, a conventional flame retardant auxiliary material, was applied instead of titanium dioxide showed poor fire resistance.

In addition, Comparative example 6, in which diatomaceous earth, a conventional fire resistant material, was applied instead of wollastonite, showed poor flame retardancy and fire resistance.

## Claims

1. A fire resistant silicone rubber composition comprising:
a silicone rubber including organopolysiloxane, silica, and a plasticizer;
a flame retardant material including platinum catalyst;
a fire resistant material including quartz and wollastonite; and
a flame retardant auxiliary material including cerium oxide and titanium dioxide.

2. The fire resistant silicone rubber composition of claim 1, wherein the quartz and wollastonite are included in a weight ratio of 1: 0.5 to 1.5.

3. The fire resistant silicone rubber composition of claim 1, wherein the cerium oxide and titanium dioxide are included in a weight ratio of 1: 0.5 to 1.5.

4. The fire resistant silicone rubber composition of claim 1, wherein the composition comprises 100 parts by weight of the silicone rubber, 0.01 to 0.5 parts by weight of the flame retardant material, 40 to 65 parts by weight of the fire resistant material, and 0.2 to 10 parts by weight of the flame retardant auxiliary material.

5. A fire resistant silicone rubber manufactured from the fire resistant silicone rubber composition of any one of claims 1 to 4.

6. The fire resistant silicone rubber of claim 5, wherein a hardness measured by a method described in ASTM D2240 is 55 to 65 shore A, a tensile strength measured by a method described in ASTM D412 is 6.0 MPa or more, and an elongation is 300 to 500 %.
